# EUROPEAN PATENT APPLICATION

(11) **EP 1 898 659 A2**
(43) Date of publication of application: **12.03.2008**
(21) Application number: 07017511.2
(22) Date of filing: 06.09.2007
(51) Int. Cl.: H04Q 7/38

(54) **Method of reporting MBMS service information for user equipment in a wireless communications system and related apparatus**

(30) Priority: 06.09.2006 US 842378 P
(71) Applicant: Innovative Sonic Limited, Tortola (VG)
(72) Inventor: Kuo, Richard Lee-Chee, Peitou Taipei City (TW)
(74) Representative: Schaeberle, Steffen

(57) **Abstract**

In order to prevent a user equipment, called UE hereinafter, from wasting unnecessary power, a method of reporting MBMS service information for the UE in a wireless communications system is provided. The method includes canceling reporting an MBMS message if there is no MBMS selected service in the UE upon entering a dedicated radio resource control state (302). Preferably, the MBMS message is an MBMS MODIFICATION REQUEST message.

## Description

This application claims the benefit of U.S. Provisional Application No. 60/842,378, filed on Sep 6, 2006 and entitled "Method And Apparatus for Improving the MBMS Selected Services Report upon UE Entering the CELL DCH state in a Wireless Communication System", the contents of which are incorporated herein by reference.

The present invention relates to a method of reporting multimedia broadcast multicast service, called MBMS, service information for a UE in a wireless communications system and related communications device according to the pre-characterizing clause of claims 1 and 6.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. To enhance multimedia functions in the 3G mobile telecommunications system, a protocol specification developed by the 3rd Generation Partnership Project (3GPP) provides Multimedia Broadcast Multicast Service (MBMS). MBMS is a point-to-multipoint bearer service and is established on an existing network architecture of the Universal Mobile Telecommunications System (UMTS), utilizing Internet Protocol (IP) packets as a medium. Thus, MBMS allows a single source entity to transmit data to multiple user entities simultaneously.

According to the protocol specification developed by the 3GPP, MBMS offers two delivery modes: MBMS Broadcast delivery mode, and MBMS Multicast delivery mode. When interested in a specific MBMS service, the UE needs to order the BM-SC for the MBMS service by establishing a service agreement including specific service provision phases. These two delivery modes have different service provision phases. The service provision phase of MBMS Broadcast delivery mode includes Service announcement, Session Start, MBMS notification, Data Transfer and Session Stop. The service provision phase of MBMS Multicast delivery mode includes Subscription, Service announcement, Joining, Session Start, MBMS notification, Data Transfer, Session Stop and Leaving. For realizing customized services, Joining and Leaving sessions utilized in MBMS Multicast delivery mode enable the BM-SC to execute authorization and payment recording for the UEs at the Joining session. The service provision phases mentioned above are well known in the art, and will not be described in detail.

From the standpoint of the RRC, all logical data communication exchange channels, be they for providing data transmission exchange to the UE or for providing RRC layer control signal transmission exchange, are defined in the context of a Radio Bearer (RB). In the UE end, the RB comprises one unidirectional, or a pair of, uplink/downlink logic data transmission exchange channels. In the network end, the RB comprises one unidirectional, or a pair of, uplink/downlink logic data transmission exchange channels. For example, a UMTS Terrestrial Radio Access Network (UTRAN) transmits MBMS configuration to the UE by establishing RBs, and the UE stops receiving MBMS service by releasing the RBs.

The MBMS services include two types: Broadcast and Multicast types. Generally, the Broadcast type services are free, so that the UE does not need to perform the Joining session before receiving them. For Broadcast type services, the UTRAN always adopts the broadcast transmission mode using point-to-multipoint (p-t-m) RBs to transmit service data and configuration. On the other hand, for the Multicast type services, the UTRAN determines whether to utilize the broadcast or multicast transmission mode based on the service charge policy. In the multicast transmission mode, the UE needs to perform the Joining session, whereas in the broadcast transmission mode, the UE doest not need to. In addition, the UTRAN performs a counting procedure to obtain the number of UEs interested in receiving MBMS services, and thereby determines whether to use point-to-point (p-t-p) or p-t-m RBs.

To enhance the MBMS for mobile TV delivery, the 3GPP introduces a concept of MBMS selected services, which are a subset of MBMS activated services of the Broadcast type, for which the UE applies RRC procedures to inform the UTRAN that the service has been selected by upper layers in the UE. An MBMS_ACTIVATED_SERVICES variable, related to the MBMS activated services, stores information about the MBMS Multicast services the UE has joined, as well as the MBMS Broadcast services the UE is interested in receiving. The stored information includes Activated service list, Service type, etc. Thus, the UTRAN knows which MBMS selected service the UE is interested in, and thereby provides the MBMS notification to the UE when these services are available. According to different RRC states, the RRC entity includes an MBMS Selected Services Short IE and an MBMS Selected Services Long IE in different RRC messages, and then reports the RRC messages to the UTRAN through specific RRC procedures. The MBMS Selected Services Short IE indicates the MBMS selected services by means of a short identity, while the MBMS Selected Services Long IE indicates the MBMS selected services by means of a full identity.

In the RRC specification, an RRC state of the UE can be a disconnection or RRC connection mode. The disconnection mode is a so called Idle mode, and the RRC connection mode includes CELL_PCH, URA_PCH, CELL_FACH and CELL_DCH states. When the UE enters the RRC connection mode from the Idle mode, the RRC entity utilizes an RRC CONNECTION REQUEST message to report the MBMS selected services to the UTRAN; for the UE in CELL_PCH, URA_PCH or CELL_FACH state, the RRC entity utilizes a CELL UPDATE message; for the UE in CELL_DCH state, the RRC entity utilizes an MBMS MODIFICATION REQUEST message.

When entering the CELL_DCH state, the RRC entity checks if there are any MBMS selected services in the UE. If not, a MBMS Selected Services Info IE is included in the MBMS MODIFICATION REQUEST message, and a status thereof is set to 'None'; if yes, the status of the MBMS Selected Services Info IE is set to 'Some', and corresponding MBMS selected service identifications are then included in the MBMS MODIFICATION REQUEST message. Finally, the MBMS MODIFICATION REQUEST message is reported to the UTRAN.

As can be seen from the above, the UE reports the MBMS MODIFICATION REQUEST message upon entering the CELL_DCH state, irrespective of the existence of MBMS selected services. However, reporting the message without any MBMS selected services in the UE causes unnecessary power consumption.

This in mind, the present invention aims at providing a method of reporting MBMS service information in a UE upon entering a dedicated RRC state in a wireless communications system and related communications device that can prevent the UE from wasting unnecessary power.

This is achieved by a method of reporting MBMS service information in a UE upon entering a dedicated RRC state in a wireless communications system and related communications device according to claims 1 and 6. The dependent claims pertain to corresponding further developments and improvements.

As will be seen more clearly from the detailed description following below, the claimed method for handling status reports after handover in a wireless communications system and related communications device includes neglecting a request in the status report received by a transmitter for retransmitting a packet that has been confirmed before.

In the following, the invention is further illustrated by way of example, taking reference to the accompanying drawings. Thereof
Fig. 1 is a functional block diagram of a communications device.
Fig. 2 is a diagram of the program code shown in Fig. 1.
Figs. 3 is a flowchart diagram of a process according to an embodiment of the present invention.

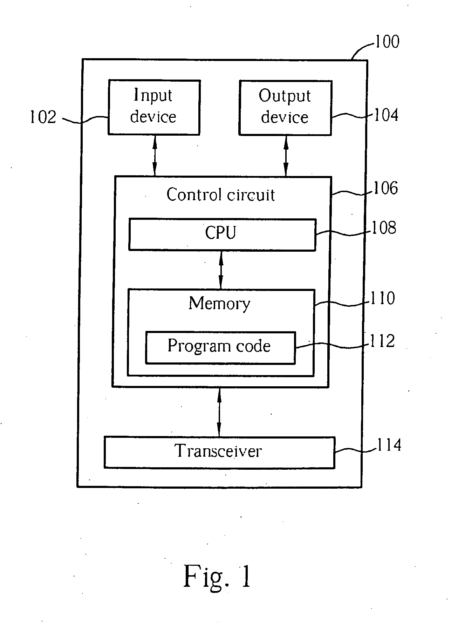

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

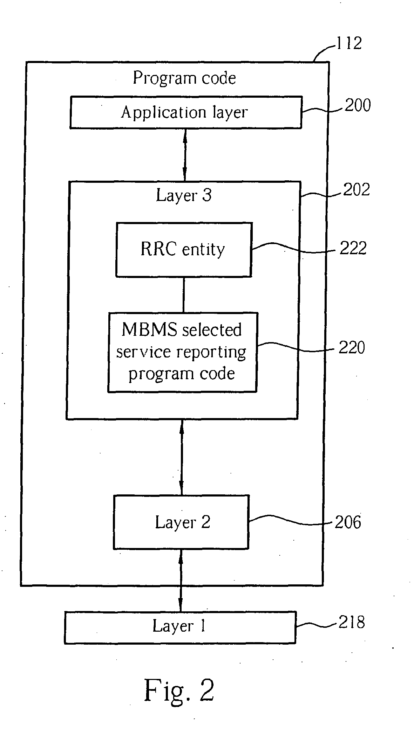

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 3 202 includes a radio resource control (RRC) entity 222, which is used for controlling the Layer 1 218 and the Layer 2 206 and performing peer-to-peer RRC communication with other communications devices, such as a base station or a Node-B. In addition, the RRC entity 222 can change an RRC state of the communications device 100, switching between an Idle mode, CELL_PCH, URA_PCH, CELL_FACH or CELL_DCH state.

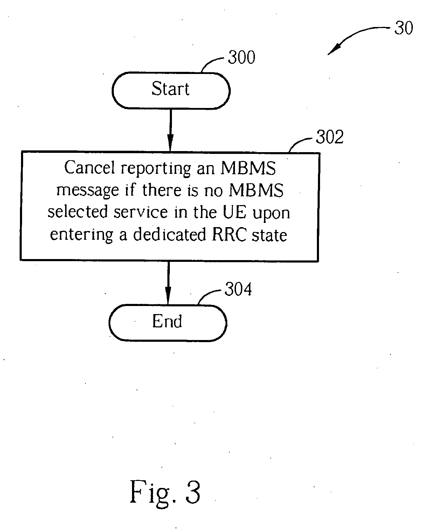

When the application layer 200 selects or deletes an MBMS service, the RRC entity 222 generates corresponding RRC messages and information elements (lEs) according to the present RRC state and thereby transmits them through related RRC procedures. In this situation, the present invention provides a MBMS selected service reporting program code 220 for improving MBMS service reporting mechanism to prevent unnecessary power waste. Please refer to Fig. 3, which illustrates a schematic diagram of a process 30 according to an embodiment of the present invention. The process 30 is utilized for reporting MBMS service information in a UE of a wireless communications system, and can be compiled into the MBMS selected service reporting program code 220. The process 30 includes the following steps:
Step 300: Start.
Step 302: Cancel reporting an MBMS message if there is no MBMS selected service in the UE upon entering a dedicated RRC state.
Step 304: End.

According to the process 30, the UE cancels reporting the MBMS message if there is no MBMS selected service in the UE when the UE enters the dedicated RRC state from other RRC states. Contrarily, the UE reports the MBMS message if there is at least one MBMS selected service in the UE upon entering the dedicated RRC state.

Preferably, the UE cancels reporting the MBMS MODIFICATION REQUEST message if there are no MBMS selected services in the UE when the UE enters the CELL_DCH state from other RRC states. Contrarily, if there is any MBMS selected service in the UE upon entering the CELL_DCH state, the UE sets a status of an MBMS Selected Services Info IE to 'Some' and includes the identity of each MBMS selected service. Finally, the UE transmits the abovementioned information to the UTRAN by reporting the MBMS MODIFICATION REQUEST message.

In conclusion, according to the prior art, the UE shall report the MBMS MODIFICATION REQUEST message upon entering the CELL_DCH state irrespective of the existence of MBMS selected services. Compared to the prior art, the embodiment of the present invention requires the UE to report the MBMS MODIFICATION REQUEST message upon entering CELL_DCH only if there is at least one MBMS selected service. Therefore, the present invention can prevent unnecessary power waste.

## Claims

1. A method of reporting multimedia broadcast multicast service, called MBMS hereinafter, service information in a user equipment, called UE hereinafter, of a wireless communications system, **characterized by** the method comprising:
canceling reporting an MBMS message if the UE has no MBMS selected service upon entering a dedicated radio resource control state (302).

2. The method of claim 1 **characterized by** the UE reporting the MBMS message if the UE has at least one MBMS selected service upon entering the dedicated radio resource control state.

3. The method of claim 1 **characterized in that** the dedicated radio resource control state is a CELL_DCH state.

4. The method of claim 1 **characterized in that** the MBMS message is an MBMS MODIFICATION REQUEST message.

5. The method of claim 1 **characterized in that** the wireless communications system is a third generation communications system.

6. A communications device (100) of a wireless communications system utilized for accurately reporting multimedia broadcast multicast service, called MBMS hereinafter, service information, the communications device comprising:
a control circuit (106) for realizing functions of the communications device;
a central processing unit (108) installed in the control circuit for executing program codes to operate the control circuit; and
a memory (110) coupled to the central processing unit for storing the program code (112);
**characterized in that** the program code comprises:
canceling reporting an MBMS message if the UE has no MBMS selected service upon entering a dedicated radio resource control state (302).

7. The communications device of claim 6 **characterized in that** the program code further comprises reporting the MBMS message if there is at least one MBMS selected service upon entering the dedicated radio resource control state.

8. The communications device of claim 6 **characterized in that** the dedicated radio resource control state is a CELL_DCH state.

9. The communications device of claim 6 **characterized in that** the MBMS message is an MBMS MODIFICATION REQUEST message.

10. The communications device of claim 6 **characterized in that** the wireless communications system is a third generation communications system.
